# EUROPEAN PATENT SPECIFICATION

(11) **EP 2 120 276 B1**
(45) Date of publication and mention of the grant of the patent: **12.10.2011**
(21) Application number: 08425338.4
(22) Date of filing: 15.05.2008
(51) Int. Cl.: H01M 2/12

(54) **Plug structure and sealed seat thereof, in a "kamina" system, for closing the holes in electric battery covers**
Kappenstruktur und Dichtungssitz davon in einem Kaminasystem zum Schließen von Löchern in elektrischen Batterieabdeckungen
Structure de bouchon et siège scellé associé, dans un système kamina, pour fermer les trous des couvercles d'une batterie électrique

(43) Date of publication of application: 18.11.2009
(73) Proprietor: T.A.B.A. S.r.l., 26025 PANDINO (Cremona) (IT)
(72) Inventor: Sampellegrini, Angelo, 26025 Pandino CREMONA (IT)
(74) Representative: Faggioni, Carlo Maria

(56) References cited:
- EP-A- 0 501 709
- EP-A- 0 794 582
- EP-A- 1 732 151
- DE-A1- 10 257 918
- DE-C1- 19 642 238
- DE-U1- 9 101 356

## Description

### Field of the Invention

The present invention concerns a plug structure and sealing seat thereof in a *kamina* system, for closing the top holes of electric batteries, in particular batteries for the automotive industry.

### Background of the Invention

It is known that electric accumulators employing an electrolyte (usually a sulphuric acid solution), both of a stationary type - as used for example in electric power plants, telephone exchanges, railway exchanges - and also of the traction type or of the type employed in motorvehicles, during recharging they develop a gas which drags electrolyte particles. On the other hand, this gas develops also during standard battery use, especially if the battery is exposed to shaking resulting from vehicle operation whereon they are mounted, for example of motorvehicles. The need hence arises - also based on sector-specific safety standards and regulations - of ensuring, on the one hand, perfect plug seal in the battery cover holes, preventing the leakage of even tiny particles of liquid but, on the other hand, allowing the free flow of the generated gases.

It is further known that, for battery construction reasons, resulting from practicality and time-saving requirements in the installation of the plugs, composite structures integrating a plurality of in-line plugs have been suggested; these structures, called *kamina*-type, comprise a plurality of individual plug elements, associated with a plug-carrying strip, which integrates a gas collection and exhaust line.

A well-known problem, which appears in these structures, is the fact that the plugs - which must be screwed into threaded seats provided in the plug-carrying strip - must guarantee, in any working condition, both a perfect seal against accidental liquid leakage, and free release of the gases.

Plug structures of this type have already been suggested, wherein the main concern was regular gas outflow and sealing to prevent the leakage of liquid within the plug structure while, concerning the plug seal in its seat, only a sealing ring such as an 0-ring has so far been provided. Solutions of this type are illustrated for example in US-5, 407, 760, or in EP-0, 756, 338, US-2002/0094473, or in EP 1732151. Such a sealing system, despite being effective, has the drawback of requiring a relatively complex structure, obtained by assembling multiple parts and hence at a significant cost.

EP501.709A1 discloses a battery cover with venting system, wherein a plug is provided with a lower inner flange formation; on top of the plug, between a closing disc and a circumferential shoulder of a tube, an anular rubber sealing washer is provided.

The object of the present invention is that of supplying a structure of multiple plugs of the above-mentioned *kamina* type, which overcomes these drawbacks through a simpler construction and, consequently, at a reduced manufacturing cost.

Such object is achieved through a device as disclosed in its essential features in the enclosed main claim.

Other inventive aspects of the invention are described in the dependent claims.

### Brief Description of the Drawings

Further features and advantages of the present invention will in any case become more evident in the following detailed description of a preferred embodiment, given purely as a nonlimiting example and illustrated in the accompanying drawings, wherein:

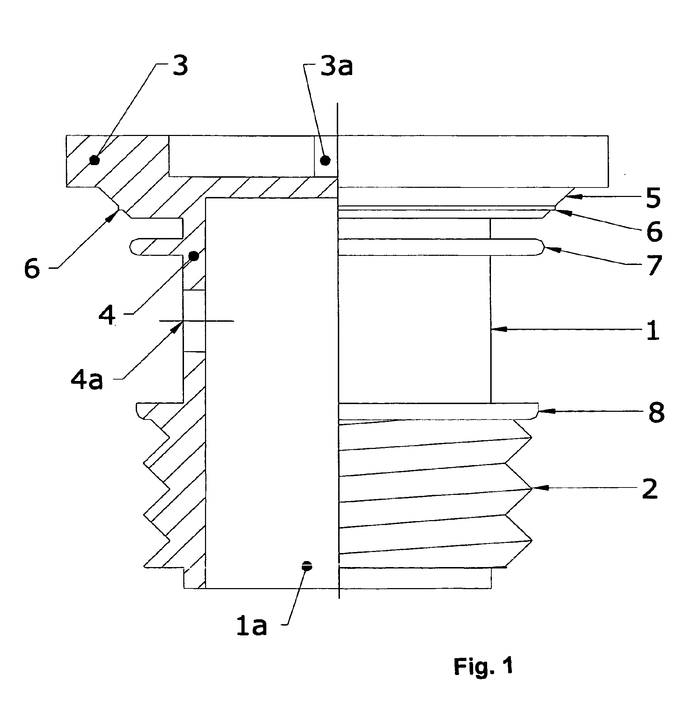

fig. 1 is an axial section of a plug body according to the invention;
fig. 2 is an axial section of one of the holes formed in the plug-carrying strip of the *Kamina* system, making up the housing seat of the plug body of fig. 1;
fig. 3 is an axial section of the plug body during the initial introduction step into the respective seat; and
fig. 4 is an axial section similar to that of fig. 3, but with the plug body fully introduced in its seat.

### Detailed Description of a Preferred Embodiment

As appears clearly from the drawings, the structure of plug body 1 comprises, in a known way, a lower threaded part 2, a handling head 3 - for example equipped with a notch 3a for a screwdriver or the like, for driving the rotation thereof - and a substantially cylindrical central wall 4, equipped with a transversal hole 4a for gas exhaust.

According to the present invention, from cylindrical plug wall 4 two mutually-distanced, annular flanges 7 and 8 project, one above and one below vent hole 4a. In particular, upper annular flange 7 is positioned at a short distance from the lower surface of head 3, while lower flange 8 is arranged adjacent to lower threaded plug portion 2.

The outer diameter of these annular flanges, as appears clearly from the drawings, is larger not only than the one of cylindrical wall 4, but also than that of the crests of threaded portion 2; in particular, the diameter of the upper flange is larger than that of the lower flange, said last diameter being preferably slightly smaller than the diameter of the main portion of the hole for the introduction of the plug. For example, the outer diameter of upper flange 7 is of 19 millimetres, while that of lower flange 8 is of 18 millimetres.

It must be stressed that these ring flanges 7 and 8 are obtained integrally with body 1 and are made of a plastic material having relative elasticity features; as a preferred material, polypropylene or PP + EPDM may be employed. As a consequence, ring flanges 7 and 8, also due to their relatively small thickness - for example of 1 mm - are sufficiently flexible to perform the sealing function better described in the following.

According to a further feature of the invention, the lower portion of head 3 - which widens to a diameter larger than that of wall 4 of body 1 - has a conical surface 5 (with a downward-facing vertex), whereon a circular rib 6 is obtained, intended to improve the seal in the way better described in the following.

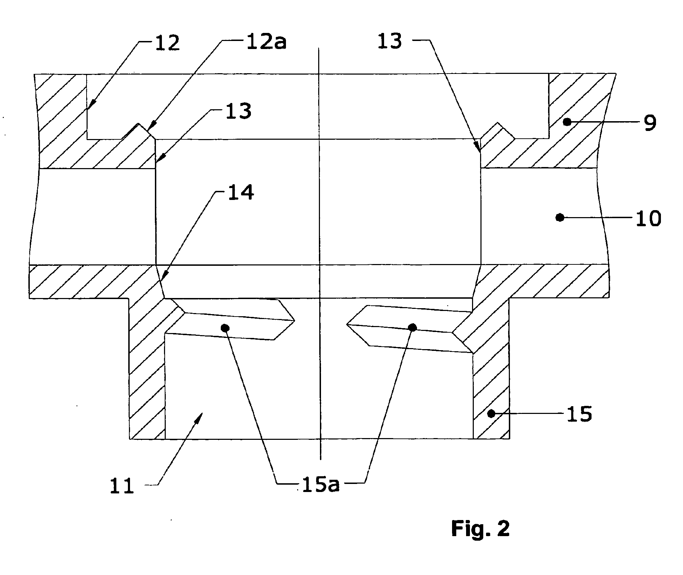

The plug-carrying strip 9 according to the invention is crossed by a common horizontal channel 10, running along the entire length thereof, and by a series of vertical holes 11, making up the housing seats of sealing plugs 1. In the detail of fig. 2 one only of these vertical holes 11 is shown, since the others represent a repetition in series thereof.

Each of the seats of introduction of the plugs into strip 9 comprises:
- an enlarged, upper circular recess 12, intended to house the head 3 of plug 1, from the bottom surface whereof a wedge-shaped, circular rib 12a projects upwards;
- a proper central hole, defined by a cylindrical wall 13, which ends in a truncated-cone lower part 14 with a downward-facing smaller base; to this central part, horizontal channel 10 is joined; and
- a lower part 15 of the hole, provided with an inner threading 15a, possibly discontinued in certain areas (due to technological requirements), intended to cooperate with the threading 2 of body 1.

As already mentioned, the inner diameter of the hole, in its central portion 13, is at least smaller than the diameter of the upper flange 7 of the plug. This ensures - as will be explained further on - an effective seal in the upper part of channel 10. For the same purpose, the conicity of the lower portion 14 of the hole ensures that at least part of such surface has a diameter smaller than that of lower flange 8.

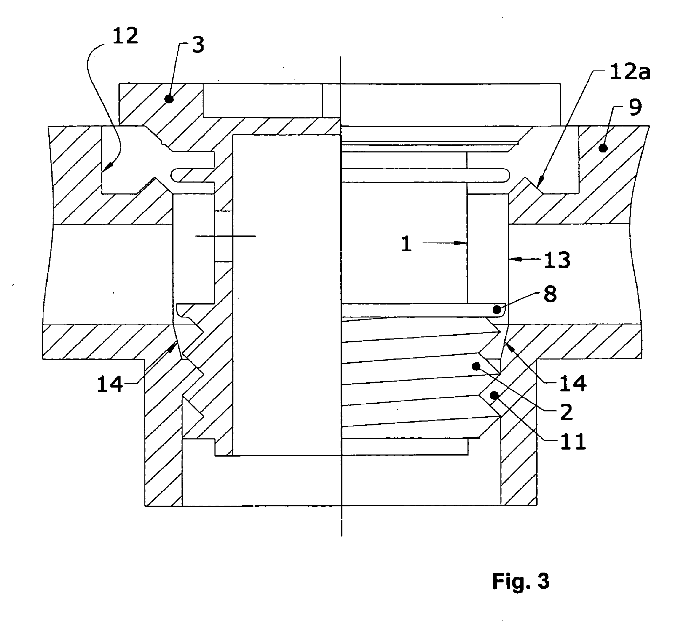

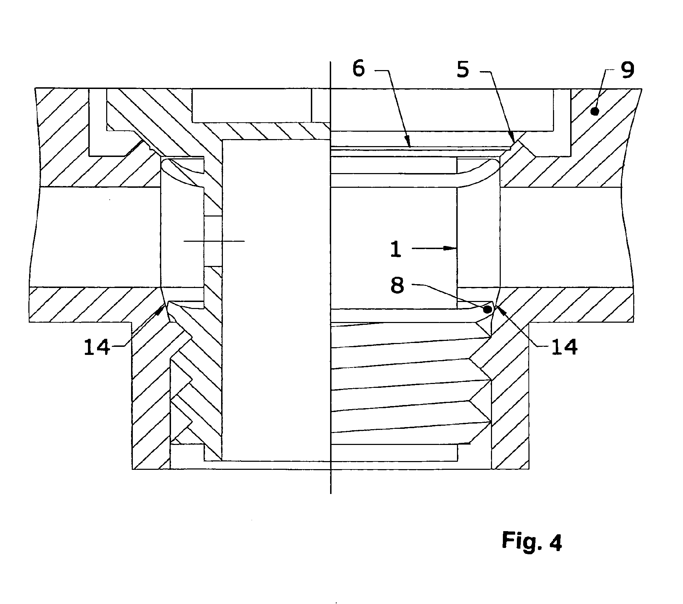

According to the invention, plug body 1 is intended to cooperate with hole 11, forming a seat in plug-carrying strip 9, in the way shown in figures 3 and 4; figure 3 shows plug 1 during the initial phase of introduction into hole 11, while figure 4 shows plug 1 during the final plug tightening phase.

More precisely, in the position shown in fig. 3 the threading 2 of plug 1 is just in the initial screwing phase; the head 3 of plug 1 is hence still raised with respect to seat 12, and ring flanges 7 and 8 are distanced from the respective resting seats in hole 11.

When the tightening of plug 1 in hole 11 is instead accomplished - in the way clearly visible in fig. 4 - by fully screwing threading 2 on threading 15a, it is obtained:
- on the one hand that the edge of ring flange 7 abuts firstly on the sloped surface of rib 12a and then on cylindrical surface 13, which causes said ring flange 7 to bend in the way shown in fig. 4; consequently, the edge of flange 7 accomplishes a forced sealing against wall 13;
- on the other hand, that the edge of flange 8 abuts on the frusto-conical surface 14 and in turn causes the flange to bend upwards, accomplishing a forced sealing against said surface 14; and
- finally, that the wedge-like surface 5 and the corresponding rib 6 abut against the complementary surface of rib 12a, in particular on the side facing towards the central axis, accomplishing a further forced seal between these walls.

It is important to notice that the two edges of ring flanges 7 and 8 keep a seal against wall 14 in positions which are just above and below the outlet hole of channel 10, so that the outflow of gases occurs in a perfectly controlled way through this channel. In addition to these seals, on the other hand, there is also the seal of wall 5 and rib 6 against the conical surface of rib 12a, which further prevents any outward outflow, above plug 1.

In substance, lower flange 8 prevents mainly the outflow of liquid (electrolyte solution) from the underlying accumulator, while upper flange 7 seals from above horizontal channel 10, avoiding gas leaks through head 3.

It must be stressed in any case that plug 1 is always shown with its inner cavity 1a fully free; this illustration mode, however, is dictated only by the need to simplify the drawing. In actual fact, inner cavity 1a defines the housing for a labyrinth-shaped body for obtaining the decantation of the drops of liquid drawn by the gas; this labyrinth-shaped body is not shown since it is fully known, for example from what is shown in Italian application MI2007A000294.

However, it is understood that the invention must not be considered limited to the particular arrangement shown above, which represents only a preferred embodiment thereof, but that a number of variants are possible, within the reach of a person skilled in the field, without departing from the scope of protection of the invention, as defined in the following claims.

## Claims

1. Closing plug structure and relative sealing seat in a *kamina* system comprising a plug-carrying strip (9), forming a cover of apertures in the lid of electrolyte electric batteries, provided with a common channel (10), for the conveying of the gases developing from the battery electrolyte, and crossed by a plurality of holes (11), forming housing seats for an equal number of closing plugs (1) of the battery apertures, said plugs being equipped with a threaded portion (2) at least in correspondence of their lower part, for the threaded engagement with a threaded seat (15a) of said holes (11), **characterised in that** from the body of each of said plugs (1) at least two flexible annular flanges (7, 8) project, formed integrally with a wall (4) of said plug and capable of establishing a seal against the inner wall (13, 14) of the relative housing hole (11) in said strip (9) XX and **in that**
said annular flanges (7, 8) are distanced in height and arranged so as to abut within said hole (11) one above and the other below said common channel (10), and the plug body (1) is closed above by a widened head (3), the lower portion whereof (5) has a surface with a conical sealing profile (5, 6) and in the wall (4) of said plug (1) comprised between said two annular flanges (7, 8) a hole (4a) is formed for the communication between the inner cavity of theplug and said common channel (10), said plug body (1), annular flanges (7, 8) and sealing profile (5, 6) of the head being made of PP+EPDM.

2. Plug structure as claimed in claim 1), **characterised in that** said annular flanges (7, 8) have an outer diameter at least larger than the nominal crest diameter of the threaded portion (2) of the plug (1). 2)

3. Plug structure as claimed in claim 2), wherein a lower flange (8) has an outer diameter smaller than the diameter of the main portion (13) of the hole (11), but larger than a conical lower portion (14) of the hole (11).

4. Plug structure as claimed in claim 2) or 3), wherein an upper flange (7) has an outer diameter larger than the diameter of the main portion (13) of the hole (11).

5. Plug structure as claimed in any one of the preceding claims, **characterised in that** said annular flanges (7, 8) abut on said inner wall of the hole (11) through conical surfaces (12a, 14).

6. Plug structure as claimed in claim 1), **characterised in that** said lower surface (5) with a conical profile has a step-shaped rib (6) forming a seal.

7. Plug structure as claimed in claim 1) or 6), **characterised in that** said hole (11) ends above in a recessed seat (12) housing the plug head (3), said seat being provided with a circular sealing rib (12a) having triangular section.

8. Plug structure as claimed in claim 1), **characterised in that** said inner cavity of the plug is the housing for a body forming a decantation labyrinth of the liquid drops dragged by the gas.

## Patentansprüche

1. Verschlusskappenstruktur und zugehöriger Dichtungssitz in einem Kaminasystem, umfassend eine Kappenträgerleiste (9), die eine Abdeckung für Öffnungen in dem Deckel von elektrischen Elektrolytbatterien bildet, mit einem gemeinsamen Kanal (10), zum Fördern der sich aus dem Batterieelektrolyt entwickelnden Gase, versehen und von einer Vielzahl von Löchern (11) durchzogen ist, die Gehäusesitze für eine gleiche Anzahl von Verschlusskappen (1) der Batterieöffnungen bilden, wobei besagte Kappen mit einem Gewindeabschnitt (nicht gezeigt) zumindest in Übereinstimmung mit deren unteren Teil für einen Gewindeeingriff mit einem Gewindesitz (15a) von besagten Löchern (11) ausgestattet sind, **dadurch gekennzeichnet, dass** von dem Körper jeder besagten Kappe (1) mindestens zwei flexible ringförmige Flansche (7, 8) vorstehen, die mit einer Wand (4) von besagter Kappe integral ausgebildet und fähig sind, eine Dichtung gegen die Innenwand (13, 14) des zugehörigen Gehäuseloches (11) in besagter Leiste (9) herzustellen, und dass besagte ringförmige Flansche (7, 8) in der Höhe im Abstand angeordnet und so gestaltet sind, dass einer über besagtem gemeinsamen Kanal (10) und der andere unter besagtem gemeinsamen Kanal (10) in besagtem Loch (11) anliegt, und der Kappenkörper (1) durch einen erweiterten Kopf (3) verschlossen ist, wobei der untere Abschnitt desselben (5) eine Oberfläche mit einem konischen Dichtungsprofil (5, 6) aufweist und in der Wand (4) von besagter Kappe (1), die zwischen besagten beiden ringförmigen Flanschen (7, 8) liegt, ein Loch (4a) zur Verbindung zwischen dem inneren Hohlraum der Kappe und besagtem gemeinsamen Kanal (10) ausgebildet ist, wobei besagter Kappenkörper (1), besagte ringförmige Flansche (7, 8) und besagtes Dichtungsprofil (5, 6) des Kopfes aus PP + EPDM hergestellt sind.

2. Kappenstruktur nach Anspruch 1, **dadurch gekennzeichnet, dass** besagte ringförmige Flansche (7, 8) einen Außendurchmesser aufweisen, der zumindest größer als der Innenspitzendurchmesser des Gewindeabschnitts (2) der Kappe (1) ist.

3. Kappenstruktur nach Anspruch 2, **dadurch gekennzeichnet, dass** ein unterer Flansch (8) einen Außendurchmesser aufweist, der geringer als der Durchmesser des Hauptabschnitts (13) des Loches (11), aber größer als ein konischer unterer Abschnitt (14) des Loches (11) ist.

4. Kappenstruktur nach Anspruch 2 oder 3, **dadurch gekennzeichnet, dass** ein oberer Flansch (7) einen Außendurchmesser aufweist, der größer als der Durchmesser des Hauptabschnitts (13) des Loches (11) ist.

5. Kappenstruktur nach einem der vorangehenden Ansprüche, **dadurch gekennzeichnet, dass** besagte ringförmige Flansche (7, 8) an besagter Innenwand des Loches (11) durch konische Oberflächen (12a, 14) anliegen.

6. Kappenstruktur nach Anspruch 1, **dadurch gekennzeichnet, dass** besagte untere Oberfläche (5) mit einem konischen Profil eine stufenförmige Rippe (6) aufweist, die eine Dichtung bildet.

7. Kappenstruktur nach Anspruch 1 oder 6, **dadurch gekennzeichnet, dass** besagtes Loch (11) oben in einem ausgesparten Sitz (12) endet, der den Kappenkopf (3) aufnimmt, wobei besagter Sitz mit einer kreisförmigen Dichtungsrippe (12a) mit dreieckigem Querschnitt versehen ist.

8. Kappenstruktur nach Anspruch 1, **dadurch gekennzeichnet, dass** besagter innerer Hohlraum der Kappe das Gehäuse für einen Körper ist, der ein Dekantationslabyrinth der durch das Gas weggeschleppten Flüssigkeitstropfen bildet.

## Revendications

1. Structure de bouchon de fermeture et siège de scellement étanche associé dans un système *kamina*, comprenant une bande portant des bouchons (9), formant un capot pour des ouvertures dans le couvercle de batteries électriques à électrolyte, munie d'un canal commun (10), pour le passage des gaz se développant à partir de l'électrolyte de la batterie, et croisée par une pluralité de trous (11), formant des sièges de logement pour un nombre égal de bouchons de fermeture (1) des ouvertures de la batterie, lesdits bouchons étant équipés d'une partie filetée (2) au moins en correspondance avec leur partie inférieure, pour la prise par vissage avec un siège fileté (15a) desdits trous (11), **caractérisée en ce que**, à partir du corps de chacun desdits bouchons (1), au moins deux flasques annulaires souples (7, 8) font saillie, formés d'un seul tenant avec une paroi (4) dudit bouchon et susceptibles d'établir un scellement étanche contre la paroi intérieure (13, 14) du trou de logement associé (11) dans ladite bande (9), et **en ce que** :
lesdits flasques annulaires (7, 8) sont à une certaine distance en hauteur, et sont disposés de façon à buter à l'intérieur dudit trou (11) l'un au-dessus et l'autre au-dessous dudit canal commun (10), et **en ce que** le corps de bouchon (1) est fermé sur le dessus par une tête élargie (3), dont la partie inférieure (5) comporte une surface avec un profil d'étanchéité conique (5, 6), et **en ce que**, dans la paroi (4) dudit bouchon (1) incluse entre lesdits deux flasques annulaires (7, 8), un trou (4a) est formé pour la communication entre la cavité intérieure du bouchon et ledit canal commun (10), ledit corps de bouchon (1), lesdits flasques annulaires (7, 8) et ledit profil d'étanchéité (5, 6) de la tête étant réalisés en polypropylène + caoutchouc de monomère d'éthylène-propylène-diène.

2. Structure de bouchon selon la revendication 1, **caractérisée en ce que** lesdits flasques annulaires (7, 8) ont un diamètre extérieur au moins supérieur au diamètre de crête nominal de la partie filetée (2) du bouchon (1).

3. Structure de bouchon selon la revendication 2, dans laquelle un flasque inférieur (8) a un diamètre extérieur inférieur au diamètre de la partie principale (13) du trou (11), mais supérieur à celui d'une partie inférieure conique (14) du trou (11).

4. Structure de bouchon selon la revendication 2 ou 3, dans laquelle un flasque supérieur (7) a un diamètre extérieur supérieur au diamètre de la partie principale (13) du trou (11).

5. Structure de bouchon selon l'une quelconque des revendications précédentes, **caractérisée en ce que** lesdits flasques annulaires (7, 8) butent sur ladite paroi intérieure du trou (11) par l'intermédiaire de surfaces coniques (12a, 14).

6. Structure de bouchon selon la revendication 1, **caractérisée en ce que** ladite surface inférieure (5) avec un profil conique comporte une nervure en forme d'épaulement (6) formant un joint d'étanchéité.

7. Structure de bouchon selon la revendication 1 ou 6, **caractérisée en ce que** ledit trou (11) s'achève sur le dessus par un siège en cavité (12) renfermant la tête de bouchon (3), ledit siège étant muni d'une nervure d'étanchéité circulaire (12a) ayant une section triangulaire.

8. Structure de bouchon selon la revendication 1, **caractérisée en ce que** ladite cavité intérieure du bouchon constitue le logement pour un corps formant un labyrinthe de décantation des gouttes de liquide entraînées par les gaz.
